# EUROPEAN PATENT APPLICATION

(11) **EP 4 528 654 A1**
(43) Date of publication of application: **26.03.2025**
(21) Application number: 23810813.8
(22) Date of filing: 08.05.2023
(51) Int. Cl.: G06T 13/80

(54) **DATA PROCESSING METHOD AND DEVICE, VIDEO CONFERENCING SYSTEM, STORAGE MEDIUM**

(30) Priority: 23.05.2022 CN 202210561296
(71) Applicant: ZTE Corporation, Shenzhen, Guangdong 518057 (CN)
(72) Inventor: LU, Jianguo, Shenzhen, Guangdong 518057 (CN); SHI, Tinggan, Shenzhen, Guangdong 518057 (CN); SHEN, Guang, Shenzhen, Guangdong 518057 (CN); LI, Jun, Shenzhen, Guangdong 518057 (CN)
(74) Representative: Savi, Massimiliano
(86) International application number: PCT/CN2023/092787
(87) International publication number: WO 2023/226740

(57) **Abstract**

The present application discloses a data processing method and device, a video conferencing system, and a computer readable storage medium. The method comprises: obtaining audio information, obtaining motion feature information of a face, and obtaining a target face image (S110); adjusting the motion feature information according to the audio information to obtain target motion feature information of the face (S120); and generating, according to the target motion feature information and the target face image, a target face image sequence corresponding to the audio information (S130).

## Description

### CROSS-REFERENCE TO RELATED APPLICATION

This application is filed on the basis of the Chinese patent application No. 202210561296.9 filed May 23, 2022, and claims priority of the Chinese patent application, the entire contents of which are incorporated herein by reference.

### TECHNICAL FIELD

The present disclosure relates to the field of image processing, and in particular to a method for data processing, a device for data processing, a video conference system and a storage medium.

### BACKGROUND

Year 2021 is believed to be the first year of the Metaverse. As one of the core roles in the Metaverse, digital people have attracted much attention. Digital man refers to a non-physical image with various human characteristics created by various computer technologies, including deep learning and computer graphics, whose existence relies on the screen. The driving of 2D digital people refers to making the characters in videos or photos move. Most of the existing voice-driven 2D digital human products adopt the technical route of collecting a person's speaking videos during a period of time, training a corresponding network model for the generation of the person's mouth shape, and modifying the person's mouth shape in the target video according to the voice to generate natural and smooth videos in the inference process. However, although the speed of inference of this technology is very fast, for 2D digital people based on images, the head posture information of the person remains unchanged, and only the mouth part is moving, which will lead to an unnatural digital people's face in the generated video and the sense of reality is poor.

### SUMMARY

Provided are a method for data processing, a device for data processing, and a computer-readable storage medium in several embodiments of the present disclosure.

According to a first aspect of the present disclosure, a method for data processing is provided. The method includes: acquiring audio information, motion feature information of a human face, and a target human face image; adjusting the motion feature information according to the audio information to acquire target motion feature information of the human face; and generating a target human face image sequence corresponding to the audio information according to the target motion feature information and the target human face image.

According to a second aspect of the present disclosure, a video conference system is provided. The video conference system includes a sending module, and a receiving module. The sending module is configured to send audio information to the receiving module. The receiving module is configured to perform the method as described above.

According to a third aspect of the present disclosure, a device for data processing is provided. The device includes a memory, a processor, and a computer program stored in the memory and executable by the processor which, when executed by the processor, causes the processor to carry out the method as described above.

According to a fourth aspect of the present disclosure, a computer-readable storage medium is provided. The computer-readable storage medium stores a computer-executable instruction which, when executed by a processor causes the processor to carry out the method as described above.

### BRIEF DESCRIPTION OF DRAWINGS

FIG. 1 depicts a flowchart showing a method for data processing according to an embodiment of the present disclosure;
FIG. 2 depicts a flowchart showing an implementation of operation S110 illustrated in FIG. 1;
FIG. 3 depicts a flowchart showing an implementation of operation S220 illustrated in FIG. 2;
FIG. 4 depicts a flowchart showing another implementation of operation S220 illustrated in FIG. 2;
FIG. 5 depicts a flowchart showing an implementation of operation S130 illustrated in FIG. 1;
FIG. 6 depicts a flowchart showing an implementation of operation S520 illustrated in FIG. 5;
FIG. 7 depicts a flowchart showing an implementation of operation S120 illustrated in FIG. 1;
FIG. 8 depicts a flowchart showing an implementation of operation S720 illustrated in FIG. 7; and
FIG. 9 depicts a flowchart showing a method for data processing according to another embodiment of the present disclosure.

### DETAILED DESCRIPTION

The purpose, technical scheme, and advantages of the present disclosure will become apparent through the following description for various embodiments in conjunction with the drawings. It should be understood that the embodiments described here are intended for illustration but not a limitation of the present disclosure.

Further, in some cases, the operations shown or described may be performed in a different order than the logical order shown in the flowcharts. It should be noted that the terms "first" and "second", if used in the description, the claims, and the drawings are intended to distinguish similar objects, and do not necessarily imply any specific order or sequence.

Provided are a method for data processing, a device for data processing, a video conference system, and a computer-readable storage medium in several embodiments of the present disclosure. According to an embodiment, a method for data processing is provided. The method includes, acquiring audio information, motion feature information of a human face, and a target human face image; adjusting the motion feature information according to the audio information to acquire target motion feature information of the human face; and generating a target human face image sequence corresponding to the audio information according to the target motion feature information and the target human face image. According to the scheme of several embodiments of the present disclosure, the motion feature information of the human face is adjusted according to the audio information to obtain the target motion feature information of the human face. The target human face image sequence corresponding to the audio information is generated according to the target motion feature information and the target human face image. The motion feature information of the human face includes the feature information of the human face in the motion state. As such, the consistency of human face motion and audio can be improved.

Several embodiments of the present disclosure will be further illustrated with reference to the drawings.

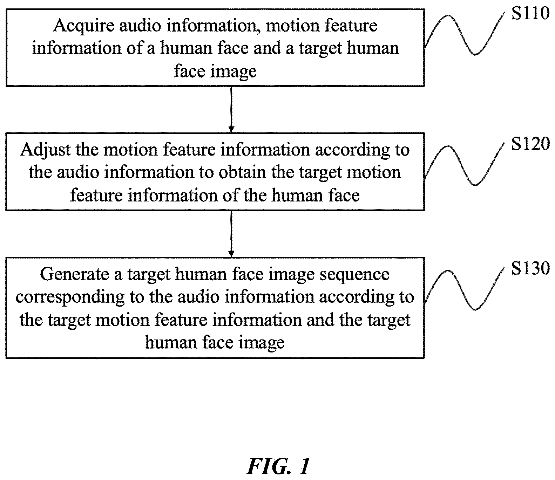

FIG. 1 depicts a flowchart showing a method for data processing according to an embodiment of the present disclosure. The method may include, but is not limited to, operations S110, S120 and S130.

At operation S110, audio information, motion feature information of a human face and a target human face image are acquired.

In this operation, the audio information refers to any audio information with human voice in the related art. The motion feature information of human face refers to the feature information of human face in a moving state. In an embodiment, the motion feature information of human face can be the variation information of human face during speaking. The target human face image can be an image with the target human face set manually, or automatically by the machine. The audio information, motion feature information of human face and target human face image are acquired in order to generate target human face image sequence corresponding to audio according to audio information, motion feature information of human face and target human face image in subsequent operations.

In another embodiment of the present disclosure, the target human face image can be any image with a human face. In an implementation, the target human face image can be selected manually or randomly by a machine, and the present disclosure is not limited thereto. The motion feature information of human face can be preset manually or generated by a machine. The motion feature information of human face can represent the variation information of each area across the human face when the person is speaking.

At operation S120, the motion feature information is adjusted according to the audio information to obtain the target motion feature information of the human face.

In this operation, the audio information can be audio information generated when the person is speaking. The motion feature information is adjusted according to the audio information to obtain the target motion feature information of the human face. In an embodiment, the motion feature information of the human face is modified according to each word generated in the audio information when the person is speaking. The motion feature information of the human face is associated with the audio information to obtain the target motion feature information of the human face. Thereby, the motion feature information of the human face can be adjusted according to the audio, not limited to the mouth information of the person, so as to improve the consistency of the facial motion of the human with the audio.

At operation S130, a target human face image sequence corresponding to the audio information is generated according to the target motion feature information and the target human face image.

In this operation, the generation of the target human face image sequence corresponding to the audio information according to the target motion feature information and the target human face image, can be the adjustment of the target human face image according to the target motion feature information, in order to correspond the target human face image to the target motion feature information to obtain the target human face image sequence. As such, the consistency of human face motion and audio is improved.

In another embodiment of the present disclosure, the target motion feature information is obtained by adjusting the motion feature information of the human face based on the audio information. Hence, the generated target human face image sequence corresponds to the audio information.

In this embodiment, according to the method for data processing including the above operation S110 to S130, the audio information, the motion feature information of the human face and the target human face image are obtained. The motion feature information is adjusted according to the audio information to obtain the target motion feature information of the human face. The target human face image sequence corresponding to the audio information is generated according to the target motion feature information and the target human face image. The motion feature information of the human face includes the feature information of the human face in the motion state. Thereby, the consistency of human face motion and audio can be improved.

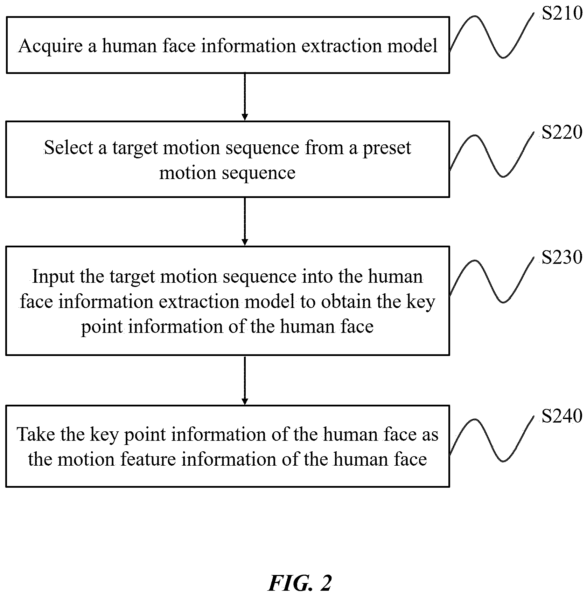

In an embodiment, as shown in FIG. 2, the method is further illustrated, where the operation S110 further includes, but is not limited to, operations S210, S220, S230, and S240.

At operation S210, a human face information extraction model is acquired.

In this operation, the human face information extraction model refers to any human face information extraction model in related art, and which is not specifically limited here. The human face information extraction model is obtained to obtain the motion feature information of the human face in subsequent operations.

In another embodiment of the present disclosure, the human face information extraction model can extract a set of self-monitoring key point information, which is independent from the identity of the person related to the human face image, from the human face image. The set of key point information includes the positions of the key points and the corresponding Jacobian matrix. These key points are distributed in the corresponding area of the human face in a certain way, and each key point affects the generation of face part in a certain area near the key point.

At operation S220, a target motion sequence is selected from at least one of preset motion sequence.

In this operation, the motion sequence refers to a sequence composed of images. In an embodiment, the motion sequence can be a preset motion sequence with a speech image of a person. The target motion sequence is selected from the preset motion sequences in order to obtain the motion feature information of the human face in subsequent operations.

The present disclosure does not specifically limit the number of preset motion sequences. When only one preset motion sequence is provided, the preset motion sequence can be directly selected as the target motion sequence.

At operation S230, the target motion sequence is input into the human face information extraction model to obtain the key point information of the human face.

In this operation, the key point information of the human face can be any key point information of the human face in related art. The key point information is obtained from the target motion sequence, such that the key point information of the human face can represent the information related to the variations in the human face, such as head posture change, face expression change, or mouth shape change. As such, it is possible to improve the consistency of the human face movement with the audio. The key point information of the human face can be obtained by inputting the target motion sequence into the human face information extraction model, in order to obtain the motion feature information of the human face in subsequent operations.

In another embodiment of the present disclosure, the human face information extraction model can be a Practical Facial Landmark Detector (PFLD). In an embodiment, the generated key points can be 68 key points including a person's face. In some embodiments, the key points include 51 key points including eyebrows, eyes, nose, and mouth. The contour key points include 17 key points.

In another embodiment of the present disclosure, the key point information of the human face may include the position information of the key points and the corresponding Jacobian matrix information. The key point information of the human face is desensitized/generalized information that excludes the information related to the identity of the person related to the human face image, so the key point information is universal/general.

At operation S240, the key point information of the human face is taken as the motion feature information of the human face.

In this operation, the key point information of the human face is taken as the motion feature information of the human face. The motion feature information of the human face indicates the influence of the gesture, emotion and mouth shape of the speaking person on the key point position across the human face. The motion feature information of the human face is universal and general, which excludes sensitive information, and can be stored in the machine in advance. As such, the calculation task of the generation of the motion feature information of the human face is reduced and the easy storage and use are achieved.

In this embodiment, according to the method for data processing including the above operations S210 to S240, the human face information extraction model is obtained. The target motion sequence is selected from the preset motion sequences, and is input into the human face information extraction model to obtain the key point information of the human face. The key point information of the human face is taken as the motion feature information of the human face. Thus, the motion feature information of the human face with high universality/versatility can be obtained. The influence of the posture and mouth shape of the human face on the key point information of the face in the face movement is fully considered. Thereby, the consistency of human face motion and audio can be improved.

It is noted that the motion sequence can take up a lot of memory, and the calculation operation of obtaining the key point information of the human face is complicated. Because the key point information of the human face does not contain the identity information of the person, it is universal and general. Therefore, the motion feature information of the human face can be obtained in advance, and only the motion feature information of the human face is stored in the system. As a result, the calculation task needed to generate the target human face image sequence can be reduced, and the calculation efficiency can be improved.

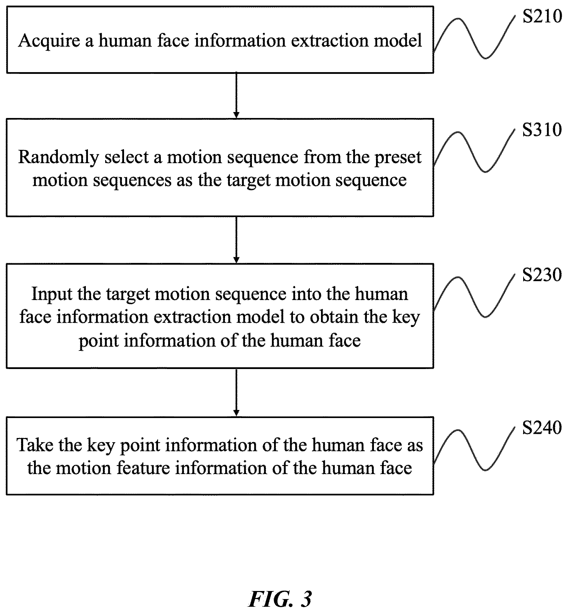

In an embodiment, as shown in FIG. 3, the method is further illustrated, where operation S220 may further include, but is not limited to, operation S310.

At operation S310, a motion sequence is randomly selected from the preset motion sequences as the target motion sequence.

In this operation, the target motion sequence is used to obtain the motion feature information of the human face. The motion sequence is randomly selected from the preset motion sequences as the target motion sequence, such that the efficiency of selecting the motion sequence can be improved, and the diversity of the selected target motion sequence can be improved. Thereby, the consistency of human face motion and audio is improved.

In another embodiment of the present disclosure, the method for random selection can be set manually. In some examples, random numbers are provided. The corresponding motion sequence is selected according to the current random number. Alternatively, the position of the motion sequence selected is recorded each time. The motion sequence information is traversed by adding the record numbers each time, so as to select the target motion sequence.

In this embodiment, according to the method for data processing including the above operation S310, a motion sequence is randomly selected from the preset motion sequences as the target motion sequence. Thereby, the efficiency of the selection of the motion sequence can be improved.

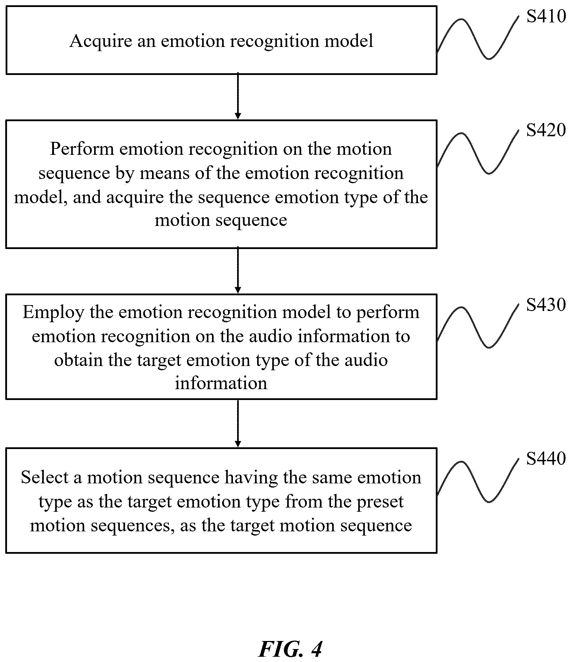

In an embodiment, as shown in FIG. 4, the method is further illustrated, where the operation S220 further includes, but is not limited to, operations S410, S420, S430, and S440.

At operation S410, a speech emotion recognition model is acquired.

In this operation, the speech emotion recognition model can be any speech emotion model that can be configured to recognize speech emotion types in related art, and which is not specifically limited here. The speech emotion recognition model is obtained to facilitate the acquisition of the target emotion type of audio information in subsequent operations.

In another embodiment of the present disclosure, the speech emotion recognition process is generally divided into four parts: audio information acquisition, data preprocessing, emotion feature extraction, and emotion recognition. Recognized emotions after speech emotion recognition can include happiness, anger, sadness, fear, surprise and quietness, or the like, and the present disclosure is not limited thereto.

At operation S420, emotion recognition is performed on the motion sequence by means of the speech emotion recognition model, and the sequence emotion type of the motion sequence is obtained.

In this operation, the emotion recognition is performed on the motion sequence by means of the speech emotion recognition model. In an implementation, the audio clips corresponding to the motion sequences are input into the speech emotion recognition model respectively, so as to obtain the sequence emotion type corresponding to each motion sequence. Alternatively, speech recognition is performed according to the audio of the motion sequence to obtain the corresponding text. Keywords are extracted from the text, so as to obtain the sequence emotion type of the motion sequence. In an embodiment, when the text information corresponding to the motion sequence contains positive key words such as "happy", the sequence emotion type of the corresponding motion sequence is set to "optimistic". The sequence emotion type is obtained to facilitate the selection of the motion sequence in subsequent operations.

In another embodiment of the present disclosure, after the key point information of the human face is acquired, the sequence emotion type is stored along with the key point information of the human face. Since the motion sequence takes up more storage as compared with the key point information of the human face and the sequence emotion type, the storage efficiency and calculation efficiency can be improved by storing the sequence emotion type along with the key point information of the human face.

At operation S430, the speech emotion recognition model is employed to perform emotion recognition on the audio information to obtain the target emotion type of the audio information.

In this operation, the emotion recognition performed on the audio information by means of the speech emotion recognition model to obtain the target emotion type of the audio information, can be implemented by a series of operations including acquiring the audio information, preprocessing audio information, extracting emotional features from the audio information, and finally performing emotion recognition to obtain the target emotion type of the audio information. The acquisition of the target emotion type of audio information is to facilitate the selection of the target motion sequence in subsequent operations.

In another embodiment of the present disclosure, emotion recognition performed on the audio information can be implemented by converting the audio information into corresponding text information/transcript first, and then extracting keywords from the text by means of the emotion recognition model to obtain the target emotion type corresponding to the audio information.

At operation S440, a motion sequence having the same emotion type as the target emotion type is selected from the preset motion sequences, as the target motion sequence.

In this operation, the motion sequence having the same emotion type as the target emotion type is selected from the preset motion sequences, as the target motion sequence. In an implementation, the motion sequence information is traversed. Each motion sequence and the sequence emotion type corresponding to the respective motion sequence are read respectively. Then, the motion sequence having the same emotion type as the target emotion type is selected as the target motion sequence. As such, the target motion sequence having the same emotion type as the audio information can be obtained. The motion feature information of the human face obtained according to the target motion sequence can better represent the audio information, so as to improve the consistency between human facial motion and audio.

In another embodiment of the present disclosure, the emotion types may include, for example, happiness, anger, sadness, fear, surprise and quietness, etc. The sequence emotion types may be pre-identified and stored in the system. Alternatively, before the motion sequence information is preset, emotion recognition can be performed on the motion sequence information by means of the emotion recognition model, and the present disclosure is not limited thereto.

In this embodiment, according to the method for data processing including the above operations S410 to S440, a speech emotion recognition model is obtained. The target emotion type of audio information is acquired through emotion recognition on the audio information by means of the speech emotion recognition model. The motion sequence having the same emotion type as the target emotion type is selected from a plurality of preset motion sequences, as the target motion sequence. As a result, the correlation between the human face motion feature information obtained according to the target motion sequence and the audio information is improved. Thereby, the consistency of human face motion and audio can be improved.

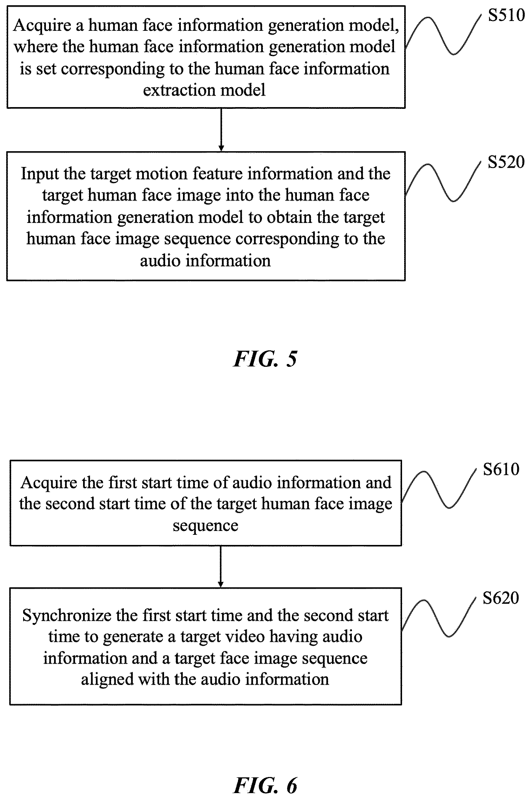

In an embodiment, as shown in FIG. 5, the method is further illustrated, where operation S130 may further include, but is not limited to, operations S510, and S520.

At operation S510, a human face information generation model is acquired. The human face information generation model is set corresponding to the human face information extraction model.

In this operation, the human face information generation model refers to any human face information generation model in related art that can generate image sequences according to the motion feature information of human faces and images, such as the Neural Talking Heads, i.e., a face animation generator. The human face information generation model is acquired to facilitate the generation of the target human face image sequence in subsequent operations.

In another embodiment of the present disclosure, the human face information generation model and the human face information extraction model are set correspondingly, such that the obtained motion feature information of the human face is aligned with the input of the human face information generation model. In an implementation, a first-order human face information extraction model is employed to extract a set of self-supervised key point information independent of the identity of the person related to the human face image. The key point information includes the positions of the key points and the corresponding Jacobian matrix. The first-order human face information generation model can generate the human face image according to the motion information.

At operation S520, the target motion feature information and the target human face image are input into the human face information generation model to obtain the target human face image sequence corresponding to the audio information.

In this operation, the target motion feature information is the target motion feature information obtained by the adjustment of the human face motion feature information according to the audio information. The target motion feature information and the target human face image are input into the human face information generation model to obtain the target human face image sequence corresponding to the audio information. The target motion feature information can represent the human face motion feature information obtained according to the audio information. Thereby, the obtained target human face image sequence can correspond to the audio information.

In another embodiment of the present disclosure, in the human face information generation model, the target human face image sequence corresponding to the audio information is obtained. In an implementation, a modified target human face image is acquired first according to the target motion feature information and the target human face image. Then, a plurality of modified target human face images are combined in sequence to obtain the target human face image sequence.

In this embodiment, according to the method for data processing including the above operations S510 to S520, a human face information generation model is obtained, and set corresponding to the human face information extraction model. The target motion feature information and the target human face image are input into the face information generation model. The target human face image sequence corresponding to the audio information is acquired. The obtained target face human image sequence can fully represent the audio information. Thereby, the consistency of human face motion and audio can be improved.

In an embodiment, as shown in FIG. 6, the method is further illustrated. The method further includes, but is not limited to, operations S610, and S620 after operation S520.

At operation S610, the first start time of the audio information and the second start time of the target human face image sequence are acquired.

In this operation, the first start time refers to the time when the audio information is intended to start playing. The second start time refers to the start time when the target human face image sequence is intended to start playing. The first start time and the second start time are obtained to align the target human face image sequence with the audio information in subsequent operations.

In another embodiment of the present disclosure, each of the first start time and the second start time are not necessarily the time when the voice is started. An audio clip includes the voice section of a person speaking. The audio clip can also contain a section without the person speaking before the voice section of the speaking person. Correspondingly, the generated target human face image sequence may also contain a section without the person speaking. Hence, the time when the audio information is intended to start playing is aligned with the time when the target human face image sequence is intended to start playing, such that, the audio information is aligned with the target human face image sequence.

At operation S620, the first start time and the second start time are synchronized to generate a target video having audio information and a target human face image sequence aligned with the audio information.

In this operation, the target human face image sequence corresponds to the audio information. In other words, the total duration of the target human face image sequence can be equal to the total duration of the audio information. The first start time and the second start time are synchronized, such that the audio information is aligned with the target human face image sequence. As a result, the target video with the audio information and the target human face image sequence aligned with the audio information can be generated.

In another embodiment of the present disclosure, due to the influence of the network speed, the generation speed of the human face information generation model or the merging error of videos, it is possible that the audio and video are out of synchronization with each other by directly combining the audio information and the generated target human face image sequence. In such a case, the start time of the audio information and the start time of the target human face image sequence are synchronized, and the target video with audio and image aligned can be thus obtained.

In this embodiment, according to the method for data processing including the above operations S610 to S620, the first start time of audio information and the second start time of the target human face image sequence are obtained. The first start time and the second start time are synchronized to generate a target video with audio information and a target human face image sequence aligned with the audio information. Thereby, the audio is aligned with the video.

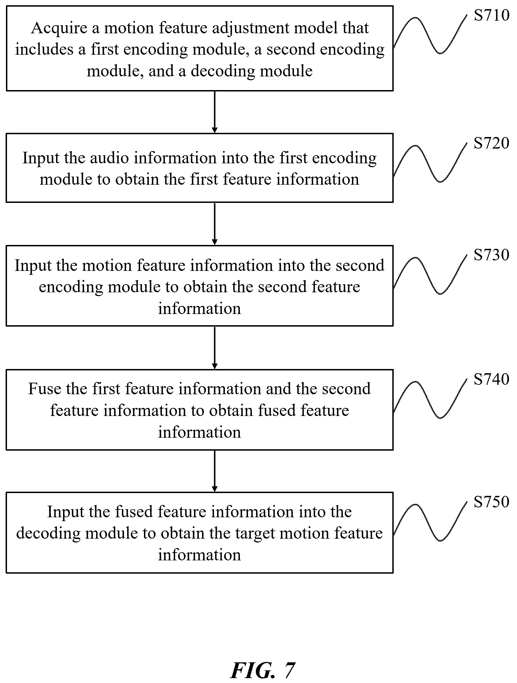

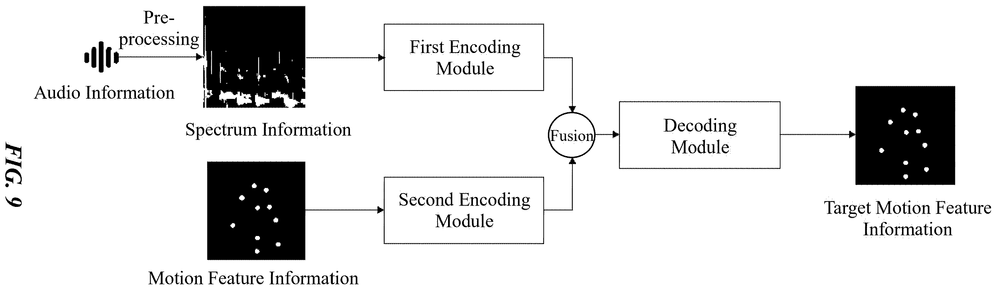

In an embodiment, as shown in FIGS. 7 and 9, the method is further illustrated, and operation S120 may further include, but is not limited to, operations S710, S720, S730, S740, and S750.

At operation S710, a motion feature adjustment model is acquired. The motion feature adjustment model includes a first encoding module, a second encoding module, and a decoding module.

In this operation, the motion feature adjustment model includes a first encoding module, a second encoding module, and a decoding module. The motion feature adjustment model is obtained to acquire the target motion feature information of the human face in the subsequent operations.

At operation S720, the audio information is input into the first encoding module to obtain the first feature information.

In this operation, the first encoding module can be any encoding module in related art. The audio information is input into the first coding module to obtain the first feature information, which facilitates obtaining the target motion feature information in subsequent operations.

In another embodiment of the present disclosure, the first encoding module may be composed of a multilayer neural network, so long as it can perform encoding, and which is not specifically limited here. The encoding by the first encoding module refers to the dimensionality reduction of the input matrix obtained based on the audio information. In other words, the input matrix is compressed into a potential spatial representation to obtain the first feature information.

At operation S730, the motion feature information is input into the second encoding module to obtain the second feature information.

In this operation, the second encoding module can be any encoding module in related art. The motion feature information is input into the second encoding module to obtain the second feature information, which facilitates obtaining the target motion feature information in subsequent operations.

In another embodiment of the present disclosure, the second encoding module may be composed of a multilayer neural network, so long as it can mainly play the role of encoding, and which is not specifically limited here. The encoding of the second encoding module refers to the dimensionality reduction of the input matrix obtained from the motion feature information, that is, the matrix of the input matrix is compressed into a potential spatial representation to obtain the second feature information.

At operation S740, the first feature information and the second feature information are fused to obtain fused feature information.

In this operation, the first feature information is intended to represent the audio information, and the second feature information is intended to represent the motion feature information. The first feature information and the second feature information are fused. The obtained fused feature information can fully fuse the audio information and the motion feature information, so as to achieve the adjustment of the motion feature information according to the audio information.

In another embodiment of the present disclosure, the dimensions of the first feature information and the second feature information are the same. Alternatively, before the fusion, the dimensions of the first feature information and the second feature information can be checked to ensure the first feature information and the second feature information can be fused. Thereby, the adjustment of the motion feature information can be achieved.

At operation S750, the fused feature information is input into the decoding module to obtain the target motion feature information.

In this operation, the fused feature information refers to the feature information compressed into potential spatial representation. The fused feature information is input into the decoding module, so as to obtain the target motion feature information. Because the fused feature information fully represents the audio information and the motion feature information, the accuracy of the obtained target motion feature information can be improved.

In another embodiment of the present disclosure, the decoding module may be composed of a multilayer neural network, so long as it can perform decoding, and which is not specifically limited here. The decoding of the decoding module refers to the reverse mapping of the fused feature information into the original information, that is, the abstract fused feature information is decoded to obtain the output target motion feature information.

In this embodiment, according to the method for data processing including the above operations S710 to S750, a motion feature adjustment model is obtained. The motion feature adjustment model includes a first encoding module, a second encoding module, and a decoding module. The audio information is input into the first encoding module to obtain the first feature information. The motion feature information is input into a second encoding module to obtain second feature information. The first feature information and the second feature information are fused to obtain fused feature information. The fused feature information is input into the decoding module to obtain the target motion feature information. The motion feature information and the audio information are respectively encoded and then fused. Finally, the fused information is decoded to form the target motion feature information. The encoder-decoder structure of deep learning can be employed to fully fuse the audio information and the motion feature information, so as to achieve the improvement of the accuracy of the obtained target motion feature information.

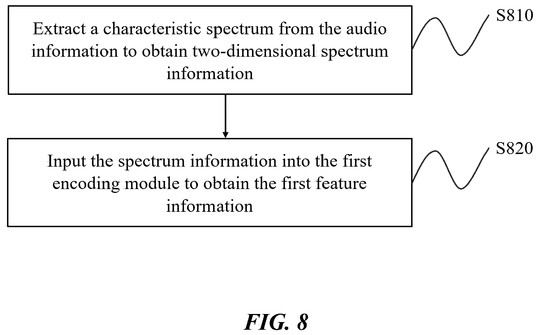

In an embodiment, as shown in FIG. 8, the method is further illustrated, where operation S720 may further include, but is not limited to, operations S810, and S820.

At operation S810, a characteristic spectrum is extracted from the audio information to obtain two-dimensional spectrum information.

In this operation, the characteristic spectrum can be Mel spectrum, Mel-frequency cepstrum or the characteristic spectrum of audio information in other related art, and the present disclosure is not limited thereto. The audio information is preprocessed to extract the characteristic spectrum, so as to obtain two-dimensional spectrum information. The two-dimensional spectrum information is obtained to obtain the first feature information in subsequent operations.

In another embodiment of the present disclosure, the audio information can be a one-dimensional audio signal. The audio information is converted into two-dimensional spectrum information through preprocessing, which can facilitate the processing of the spectrum information in subsequent operations.

At operation S820, the spectrum information is input into the first encoding module to obtain the first feature information.

In this operation, the input of the first coding module can be two-dimensional spectrum information. The spectrum information is input into the first encoding module to obtain the first feature information. The audio information is processed to obtain the two-dimensional spectrum information.

In another embodiment of the present disclosure, correspondingly, the motion feature information can also be two-dimensional motion feature information, so as to facilitate the fusion of the first feature information and the second feature information in the subsequent operations.

In this embodiment, according to the method for data processing including the above operations S810 to S820, the characteristic spectrum is extracted from the audio information to obtain two-dimensional spectrum information. Then, the spectrum information is input into the first encoding module to obtain the first feature information. The audio information is preprocessed. The audio information is first converted into two-dimensional spectrum information, thus facilitating the processing of the spectrum information in the subsequent operations.

According to another embodiment of the present disclosure, a video conference system is provided. The system includes a sending module and a receiving module.

The sending module is configured to send audio information to the receiving module. It can be understood that the sending module in the video conference system is arranged at a sending end and the receiving module is arranged at a receiving end. The sending end and the receiving end can be connected in an electronic way or in other ways in the related art.

The receiving module is configured to perform the method for data processing described in any of the embodiments above, for example, the above S110 to S130 described in conjunction with FIG. 1, operations S210 to S240 described in conjunction with FIG. 2, S310 described in conjunction with FIG. 3, S410 to S440 described in conjunction with FIG. 4, S510 to S520 described in conjunction with FIG. 5, S610 to S620 described in conjunction with FIG. 6, S710 to S750 described in conjunction with FIG. 7, or S810 to S820 described in conjunction with FIG. 8.

In traditional video conference systems, the sending module needs to encode audio and video into a video stream, then transmit the video stream through the network, and finally decode the video stream at the receiving end. Traditional video encoding methods include H.264, H.265, etc. Different encoding protocols adopt different methods to reduce bandwidth demand, among which the video part needs for the major part of bandwidth. In the video conference scene, users tend to pay more attention to the variation of facial motion in the video. According to an embodiment of the present disclosure, only the audio is sent without any images. The sending module only sends audio information. The receiving module generates audio-matched images and drives the 2D digital human motion in real-time. In this way, the function of video calls can be realized with the bandwidth of voice calls needed only, which can improve the user experience in a weak network connection environment.

In an embodiment, the video conference system further includes a display module connected with the receiving module. The display module is configured to display the target human face image sequence generated by the receiving module.

It can be understood that the display module can be any display in the related art, such as a display screen. The display module is connected with the receiving module. In other words, the display module can be arranged at the receiving end, and the display module is set to display the target human face image sequence generated by the receiving module. The receiving module is configured to perform the method for data processing described in any one of the related embodiments above, to generate a target human face image sequence.

According to an embodiment of the present disclosure, a device for data processing is provided. The device includes a memory, a processor, and a computer program stored in the memory and executable by the processor.

The processor and the memory may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

Non-transitory software programs and instructions of the method for data processing described in the above embodiments are stored in a memory which, when executed by a processor, causes the processor to carry out operations of any one of the methods described above, for example, the above-described operations S110 to S130 described in conjunction with FIG. 1, S210 to S240 described in conjunction with FIG. 2, S310 described in conjunction with FIG. 3, S410 to S440 described in conjunction with FIG. 4, S510 to S520 described in conjunction with FIG. 5, S610 to S620 described in conjunction with FIG. 6, S710 to S750 described in conjunction with FIG. 7, or S810 to S820 described in conjunction with FIG. 8.

According to yet another embodiment of the present disclosure, a computer-readable storage medium is provided. The computer-readable storage medium stores computer-executable instructions which, when executed by a processor or controller, for example, by a processor in the embodiment of the electronic device, causes the processor to carry out the operations of the method described above, for example, the above-described operations S110 to S130 described in conjunction with FIG. 1, S210 to S240 described in conjunction with FIG. 2, S310 described in conjunction with FIG. 3, S410 to S440 described in conjunction with FIG. 4, S510 to S520 described in conjunction with FIG. 5, S610 to S620 described in conjunction with FIG. 6, S710 to S750 described in conjunction with FIG. 7, or S810 to S820 described in conjunction with FIG. 8.

According to several embodiments of the present disclosure, the method includes, acquiring audio information, motion feature information of a human face and a target human face image; adjusting the motion feature information according to the audio information to obtain the target motion feature information of the human face; and generating the target human face image sequence corresponding to the audio information according to the target motion feature information and the target human face image. According to the scheme of several embodiments of the present disclosure, the motion feature information of the human face is adjusted according to the audio information to obtain the target motion feature information of the human face. The target human face image sequence corresponding to the audio information is generated according to the target motion feature information and the target human face image. The motion feature information of the human face includes the feature information of the human face in the motion state. As such, the consistency of human face motion and audio can be improved.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

## Claims

1. A method for data processing, comprising:
acquiring audio information, motion feature information of a human face, and a target human face image;
adjusting the motion feature information according to the audio information to acquire target motion feature information of the human face; and
generating a target human face image sequence corresponding to the audio information according to the target motion feature information and the target human face image.

2. The method according to claim 1, wherein acquiring the motion feature information of the human face comprises:
acquiring a human face information extraction model;
selecting a target motion sequence from at least one preset motion sequence;
inputting the target motion sequence into the human face information extraction model to acquire key point information of the human face; and
taking the key point information of the human face as the motion feature information of the human face.

3. The method according to claim 2, wherein selecting the target motion sequence from the at least one preset motion sequence comprises:
randomly selecting a motion sequence from the at least one preset motion sequence as the target motion sequence.

4. The method according to claim 2, wherein after acquiring the audio information, selecting the target motion sequence from the at least one preset motion sequence comprises:
acquiring an emotion recognition model;
performing emotion recognition on the motion sequence by means of the emotion recognition model, and acquiring a sequence emotion type of the motion sequence;
performing emotion recognition on the audio information by means of the emotion recognition model to acquire a target emotion type of the audio information; and
selecting, from the at least one preset motion sequence, a motion sequence having a same emotional type as the target emotion type, as the target motion sequence.

5. The method according to claim 2, wherein generating the target human face image sequence corresponding to the audio information according to the target motion feature information and the target face image comprises:
acquiring a human face information generation model that is set corresponding to the human face information extraction model; and
inputting the target motion feature information and the target human face image into the human face information generation model to acquire the target human face image sequence corresponding to the audio information.

6. The method according to claim 5, wherein after inputting the target motion feature information and the target human face image into the human face information generation model to acquire the target human face image sequence corresponding to the audio information, the method further comprises:
acquiring a first start time of the audio information and a second start time of the target human face image sequence; and
synchronizing the first start time with the second start time to generate a target video containing the audio information, and the target human face image sequence aligned with the audio information.

7. The method according to claim 1, wherein adjusting the motion feature information according to the audio information to acquire the target motion feature information of the human face comprises:
acquiring a motion feature adjustment model comprising a first encoding module, a second encoding module, and a decoding module;
inputting the audio information into the first encoding module to acquire first feature information;
inputting the motion feature information into the second encoding module to acquire second feature information;
fusing the first feature information and the second feature information to acquire fused feature information; and
inputting the fused feature information into the decoding module to acquire the target motion feature information.

8. The method according to claim 7, wherein inputting the audio information into the first encoding module to acquire the first feature information comprises:
extracting a characteristic spectrum from the audio information to acquire two-dimensional spectrum information; and
inputting the spectrum information into the first encoding module to acquire the first feature information.

9. A video conference system, comprising a sending module, and a receiving module, wherein:
the sending module is configured to send audio information to the receiving module; and the receiving module is configured to perform the method according to any one of claims 1 to 8the .

10. The video conference system according to claim 9, further comprising a display module, wherein:
the display module is connected with the receiving module, and the display module is configured to display the target human face image sequence that is generated by the receiving module.

11. A device for data processing, comprising a memory, a processor and a computer program stored in the memory and executable by the processor which, when executed by the processor causes the processor to carry out the method according to any one of claims 1 to 8.

12. A computer-readable storage medium storing a computer-executable instruction which, when executed by a processor, causes the processor to carry out the method as claimed in any one of claims 1 to 8.
